Europäisches Patentamt

European Patent Office

Office européen des brevets

(19)

(11) **EP 1 368 585 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
*F16H 61/00* *(2006.01)*

(21) Anmeldenummer: **02724196.7**

(86) Internationale Anmeldenummer:
**PCT/EP2002/002362**

(22) Anmeldetag: **05.03.2002**

(87) Internationale Veröffentlichungsnummer:
**WO 2002/073071 (19.09.2002 Gazette 2002/38)**

(54) **VERFAHREN ZUR STEUERUNG EINES STUFENLOSEN GETRIEBES UND VERWENDUNG EINES SOLCHEN VERFAHRENS**

METHOD OF CONTROLLING A CONTINUOUSLY VARIABLE TRANSMISSION AND USE OF SUCH A METHOD

PROCÉDÉ DE COMMANDE D'UNE TRANSMISSION À VARIATION CONTINUE ET UTILISATION D'UN TEL PROCÉDÉ

(84) Benannte Vertragsstaaten:
**DE FR GB IT**

(30) Priorität: **10.03.2001 DE 10111607**

(43) Veröffentlichungstag der Anmeldung:
**10.12.2003 Patentblatt 2003/50**

(73) Patentinhaber:
• **Conti Temic microelectronic GmbH**
**90411 Nürnberg (DE)**
• **AUDI AG**
**85045 Ingolstadt (DE)**

(72) Erfinder:
• **HOMMES, Georg**
**85049 Ingolstadt (DE)**
• **LUDWIG, Rainer**
**90409 Nürnberg (DE)**
• **OJAMIES, Ari**
**91166 Georgensgmünd (DE)**

(56) Entgegenhaltungen:
DE-A- 4 040 502   US-A- 4 355 547
US-A- 4 663 990   US-A- 4 867 732
US-A- 6 165 101

EP 1 368 585 B1

**Beschreibung**

Die Erfindung betrifft ein Verfahren zur Steuerung eines stufenlosen Getriebes gemäß dem Oberbegriff des Patentanspruchs 1.

Aus der gattungsgemäßen DE41 06 471 A1 ist ein Verfahren zur Steuerung eines in einem Kraftfahrzeug eingesetzten stufenlosen Getriebes bekannt. Das Getriebe ist dabei als Umschlingungsgetriebe mit zwei Kegelscheibenräder und einem Umschlingungsband ausgeführt, wobei die Kegelscheibenräder über das Umschlingungsband miteinander gekoppelt sind und jeweils eine als Verstellmittel fungierende axial verschiebbare Kegelscheibe aufweisen. Die Übersetzung des Getriebes läßt sich durch eine Verschiebung der Verstellmittel innerhalb eines durch zwei Übersetzungsendwerte begrenzten Bereichs stufenlos variieren. Als nachteilig erweist sich hierbei, daß die Übersetzungsendwerte von Fertigungstoleranzen und Verschleißerscheinungen abhängig sind und sich zudem dynamisch in Abhängigkeit des Schlupfs zwischen den Kegelscheibenrädem und dem Umschlingungsband ändern können, so daß die Verstellmittel bei einem Betrieb mit maximaler oder minimaler Übersetzung in ihre durch mechanische Wegbegrenzungen vorgegebenen Endlagen bewegt werden, in denen hohe Endlagenkräfte auf die Verstellmittel wirken, die sich ungünstig auf den Wirkungsgrad und die Lebensdauer des Getriebes auswirken.

Aus der EP 785 381 A1 ist bekannt, daß ein Hineinlaufen der Verstellmittel in ihre mechanische Endlagen unerwünscht ist. Ein derartiger unerwünschter Betrieb läßt sich vermeiden, indem ein Sicherheitsabstand zu den Übersetzungsendwerten eingehalten wird, was sich jedoch als nachteilig erweist, da dann ein für bestimmte Fahrstrategien optimaler Betrieb mit höchst- oder niedrigstzulässiger Übersetzung nicht möglich ist.

Der Erfindung liegt die Aufgabe zugrunde, ein Verfahren gemäß dem Oberbegriff des Patentanspruchs 1 anzugeben, das die Ausnutzung des gesamten Aussteuerbereichs des Getriebes bei gleichzeitiger Begrenzung der in den Endlagen der Verstellmittel wirkenden Endlagenkräfte ermöglicht.

Die Aufgabe wird durch ein Verfahren zur Steuerung eines stufenlosen Getriebes mit den Merkmalen des Patentanspruchs 1 und durch die Verwendung eines solchen Verfahrens zur Steuerung einer Antriebseinheit eines Kraftfahrzeugs mit Stufenlosen Getriebe entsprechend den Merkmalen des Patentanspruchs 4 gelöst. Vorteilhafte Ausgestaltungen und Weiterbildungen ergeben sich aus den Unteransprüchen.

Erfindungsgemäß wird für die Steuerung eines stufenlosen Getriebes ein Endlagenbetriebsmodus als Betriebsmodus definiert, in dem die Übersetzung des Getriebes durch eine Modulation mindestens einer die Verstellung der Übersetzung bewirkenden Aktuatorkraft moduliert wird, ein von der Modulation der Übersetzung des Getriebes abhängiger Meßwert ermittelt wird und der ermittelte Meßwert durch Variation der mittleren Aktuatorkraft oder der mittleren Aktuatorkräfte, d. h. durch Variation des Gleichanteils der Aktuatorkraft oder des Gleichanteils der Aktuatorkräfte, auf einen vorgegebenen Sollwert geregelt wird.

Der Sollwert wird vorteilhafterweise derart gewählt, daß mindestens ein verschiebbares Verstellmittel, durch dessen Verschiebung die Übersetzung des Getriebes verstellt wird, bei auf den Sollwert eingeregeltem Meßwert mit einer vorgegebenen mittleren Kraft auf eine mechanische Wegbegrenzung wirkt.

In einer vorteilhaften Weiterbildung des Verfahrens wird neben dem Endlagenbetriebsmodus ein Normalbetriebsmodus als weiterer Betriebsmodus des Getriebes definiert. Im Normalbetriebsmodus wird die Übersetzung des Getriebes in herkömmlicher Weise auf einen von einer gewählten Regelstrategie abhängigen Wert eingestellt wird. Diese Einstellung kann dabei durch Regelung der Übersetzung oder der Drehzahl eines das Getriebe antreibenden Motors erfolgen. Die Selektion des Betriebsmodus erfolgt in Abhängigkeit der Übersetzung derart, daß die Antriebseinheit bei im Bereich der Übersetzungsendwerte liegenden Werten der Übersetzung im Endlagenbetriebsmodus und ansonsten im Normalbetriebsmodus betrieben wird.

Die Vorteile des erfindungsgemäßen Verfahrens liegen insbesondere in der Erhöhung des Wirkungsgrads des Getriebes durch die Ausnutzung des vollen Aussteuerbereichs und durch die Vermeidung hoher, in den Endlagen der Verstellmittel wirkender Endlagenkräfte und in der hohen Lebensdauer des Getriebes, die sich aus der Vermeidung hoher Endlagenkräfte und der hieraus resultierenden Reduzierung der mechanischen Belastung der Bauteile des Getriebes ergibt. Das Verfahren eignet sich bestens zum Einsatz in einem Kraftfahrzeug mit stufenlosem Getriebe.

Die Erfindung wird nachfolgend anhand von Ausführungsbeispielen und Figuren näher erläutert. Es zeigen:

Figur 1    eine Prinzipdarstellung eines stufenlosen Getriebes,

Figur 2    ein Funktionsblockschaltbild eines Regelkreises, mit dem die Übersetzung des Getriebes aus Figur 1 in einem Endlagenbetriebsmodus geregelt wird,

Figur 3    ein Diagramm eines mit dem Regelkreis aus Figur 2 ermittelten Meßwerts in Abhängigkeit der Übersetzung des Getriebes.

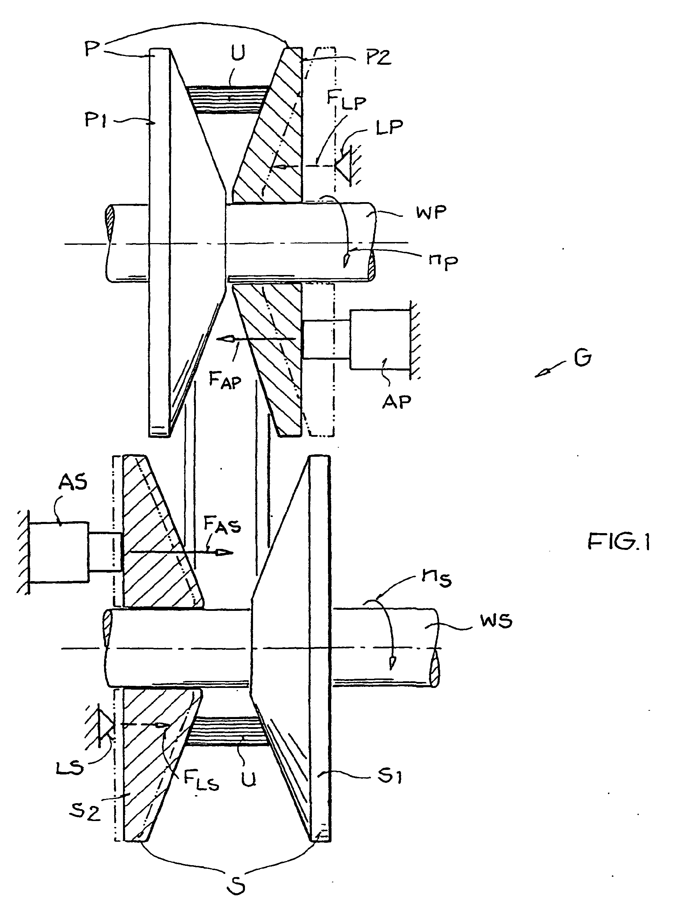

Das in Figur 1 gezeigte stufenlose Getriebe G ist Teil einer das Getriebe G und einen Motor aufweisenden Antriebseinheit eines Kraftfahrzeugs. Es umfaßt eine vom Motor des Kraftfahrzeugs angetriebene primäre Welle WP, ein mit der primären Welle WP verbundenes primäres Kegelscheibenrad P, eine sekundäre Welle WS, ein mit der sekundären Welle WS verbundenes sekundäres Kegelscheibenrad S und ein beispielsweise als Schubgliederband ausgeführtes Umschlingungsband U, welches die beiden Kegelscheibenräder P, S umschlingt und die Drehbewegung des primären Kegelscheibenrad P auf das sekundäre Kegelscheibenrad S überträgt. Das primäre Kegelscheibenrad P weist zwei Kegelscheiben P1, P2 auf, wobei die eine Kegelscheibe P1 mit der primären Welle WP fest verbunden ist und die andere Kegelscheibe P2 auf der primären Welle WP durch die Aktuatorkraft $F_{AP}$ eines primären Aktuators AP axial verschiebbar ist. Die axiale Bewegung der Kegelscheibe P2 ist dabei durch die symbolisch dargestellte mechanische Wegbegrenzung LP begrenzt.

Wenn die verschiebbare Kegelscheibe P2, wie durch gestrichelte Linien angedeutet, in ihre durch die Wegbegrenzung LP vorgegebene Endlage bewegt wird, dann wirkt die Wegbegrenzung LP mit einer Endlagenkraft $F_{LP}$ auf die Kegelscheibe P2. Analog dazu weist das sekundäre Kegelscheibenrad S zwei Kegelscheiben S1, S2 auf, von denen die eine Kegelscheibe S1 mit der sekundären Welle WS fest verbunden ist und die andere Kegelscheibe S2 auf der sekundären Welle WS durch die Aktuatorkraft $F_{AS}$ eines sekundären Aktuators AS axial verschiebbar ist. Die axiale Bewegung der verschiebbaren Kegelscheibe S2 ist dabei durch die symbolisch dargestellte mechanische Wegbegrenzung SP begrenzt. Wenn die verschiebbare Kegelscheibe S2, wie durch gestrichelte Linien angedeutet, in ihre durch die Wegbegrenzung SP vorgegebene Endlage bewegt wird, dann wirkt die Wegbegrenzung SP mit einer Endlagenkraft $F_{LS}$ auf die Kegelscheibe S2. Durch die stufenlose axiale Verschiebung der Kegelscheiben P2, S2 wird der Abstand zwischen den Kegelscheiben des jeweiligen Kegelscheibenrads P bzw. S und somit der wirksame Durchmesser des Umschlingungsbands U am jeweiligen Kegelscheibenrad P bzw. S stufenlos variiert, was eine stufenlose Variation der Übersetzung $i = n_P/n_S$ des Getriebes G, d. h. des Verhältnisses der Antriebsdrehzahl $n_P$ der primären Welle WP zur Abtriebsdrehzahl $n_S$ der sekundären Welle WS, zur Folge hat. Die axial verschiebbaren Kegelscheiben P2, S2 stellen somit Verstellmittel zur Steuerung der Übersetzung i des Getriebes G dar.

Die Aktuatorkräfte $F_{AP}$, $F_{AS}$ werden in Kräfte umgesetzt, die das Umschlingungsband U spannen. Diese Kräfte, über die die axialen Bewegungen der verschiebbaren Kegelscheiben P2, S2 gekoppelt sind, kompensieren sich bei einer konstanten Übersetzung i, da das Getriebe G sich dann im Kräftegleichgewicht befindet. Bei konstanter Übersetzung i erhält man daher für die in axiale Richtung auf die verschiebbaren Kegelscheiben P2, S2 wirkenden Kräfte folgende Gleichungen:

$$F_P \approx K \cdot F_S,$$

mit

$$F_P \approx F_{AP} + F_{LP}$$

und

$$F_S \approx F_{AS} + F_{LS},$$

wobei die Kräfte $F_P$ und $F_S$ die auf die verschiebbaren Kegelscheiben P2 bzw. S2 wirkenden Anpreßkräfte darstellen und der Faktor K ein Stützkraftverhältnis dar stellt, das eine Funktion von Arbeitspunktparametern, insbesondere eine Funktion des übertragenen Drehmoments, der Übersetzung i, der Antriebsdrehzahl $n_P$ und der Anpreßkraft, ist.

Weiterhin wird eine Verstellkraft $F_V$ wie folgt definiert:

$$F_V = K \cdot F_S - F_P = K \cdot F_{AS} - F_{AP} + K \cdot F_{LS} - F_{LP}.$$

Die Verstellkraft $F_V$ setzt sich aus einem Aktuatoranteil $F_{VA} = K \cdot F_{AS} - F_{AP}$ und einem Endlagenkraftanteil $F_{VL} = K \cdot F_{LS} - F_{LP}$ zusammen. Sie ist bei konstanter Übersetzung gleich Null, ansonsten ist sie ungleich Null und bestimmt die Geschwindigkeit der Übersetzungsverstellung. Während der Übersetzungsverstellung werden die Aktuatorkräfte

$F_{AP}$, $F_{AS}$ stets derart eingestellt, daß sowohl für die Anpreßkräfte $F_P$, $F_S$ bestimmte geforderte Werte, als auch für die Verstellkraft $F_V$ ein bestimmter geforderter, von der gewünschten Übersetzungsverstellgeschwindigkeit abhängiger Wert eingehalten werden.

Da der axiale Hubweg der verschiebbaren Kegelscheiben P2, S2 begrenzt ist, läßt sich die Übersetzung i nur zwischen einem unteren Übersetzungsendwert - der Anfangsübersetzung - und einem oberen Übersetzungsendwert - der Endübersetzung - variieren. Die genauen Übersetzungsendwerte sind jedoch nicht bekannt, da sie sowohl von geometrischen Eigenschaften des Getriebes G, beispielsweise von Fertigungstoleranzen, von während des Betriebs auftretendem Verschleiß und von der Dehnung des Umschlingungsbands U, als auch von dynamischen Eigenschaften, beispielsweise von dem Schlupf zwischen den Kegelscheibenrädern P, S und dem Umschlingungsband U, abhängig sind.

Während des Fahrbetriebs werden die Antriebsdrehzahl $n_P$, d. h. die Motordrehzahl des die primäre Welle WP antreibenden Motors, und die Übersetzung i des Getriebes auf bestimmte vom Fahrerwunsch, von der Fahrsituation und von einer gewählten Regelstrategie vorgegebene Sollwerte geregelt. In bestimmten Fahrsituationen ist es erwünscht, mit möglichst hoher oder möglichst geringer Übersetzung i zu fahren. So läßt sich mit einer geringen Übersetzung i der Kraftstoffverbrauch und die Geräuschentwicklung des Kraftfahrzeugs optimieren und mit einer hohen Übersetzung i das Beschleunigungs- und Steigveralten des Kraftfahrzeugs optimieren. Bei einer hohen oder geringen Übersetzung i besteht aber die Gefahr, daß das Getriebe G übersteuert wird, d. h. daß die verschiebbaren Kegelscheiben P2 bzw. S2 mit hoher Kraft in ihre Endlagen gepreßt werden, so daß hohe Endlagenkräfte $F_{LP}$ bzw. $F_{LS}$ auftreten können. Hohe Endlagenkräfte $F_{LP}$, $F_{LS}$ können aber zu einer Reduzierung des Wirkungsgrads und der Lebensdauer des Getriebes G führen.

Um diese Nachteile zu vermeiden, werden ein Normalbetriebsmodus und ein Endlagenbetriebsmodus als Betriebsmodi des Getriebes definiert, wobei im Normalbetriebsmodus ein Hineinfahren der verschiebbaren Kegelscheiben P2, S2 in ihre Endlagen unerwünscht ist und im Endlagenbetriebsmodus ein Hineinfahren der verschiebbaren Kegelscheiben P2, S2 in ihre Endlagen zulässig ist.

Die Betriebsmodi werden in Abhängigkeit der momentanen Übersetzung i selektiert. Hierzu werden vorteilhafterweise zwei zwischen den Übersetzungsendwerten liegende Übersetzungsschwellwerte als Grenzen eines Normalübersetzungsbereichs derart definiert, daß die verschiebbaren Kegelscheiben P2, S2 bei im Normalübersetzungsbereich liegenden Übersetzungswerten i mit Sicherheit nicht in ihre Endlagen bewegt werden. Bei im Normalübersetzungsbereich liegenden Übersetzungswerten i wird dann der Normalbetriebsmodus und ansonsten der Endlagenbetriebsmodus als Betriebsmodus gewählt. Denkbar ist aber auch statt Übersetzungsschwellwerte Übersetzungsschwellbänder zu definieren. Eine Umschaltung von einem der Betriebsmodi in den anderen erfolgt in diesem Fall nur bei einer Änderung der Übersetzung i, bei der eines der Übersetzungsschwellbänder vollständig durchlaufen wird. Man erhält somit ein hystereseförmiges Schaltverhalten, durch das ein dauerndes Umschalten der Betriebmodi bei im Bereich der Übersetzungsschwellwerte liegenden Übersetzungswerten i verhindert wird.

Im Normalbetriebsmodus wird die Antriebseinheit in herkömmlicher Weise gesteuert, d. h. die Übersetzung i des Getriebes G wird gezielt geregelt oder sie ergibt sich durch die Regelung der Antriebsdrehzahl $n_P$, wobei die jeweilige Regelung in Abhängigkeit der Fahrsituation, der gewählten Fahrstrategie und des vom Fahrer durch die Betätigung eines Fahrpedals angezeigten Fahrerwunsches vorgenommen wird. Demgegenüber werden im Endlagenbetriebsmodus die Aktuatorkräfte $F_{AP}$, $F_{AS}$ derart geregelt, daß gerade noch zulässige Endlagenkräfte $F_{LP}$, $F_{LS}$ auftreten.

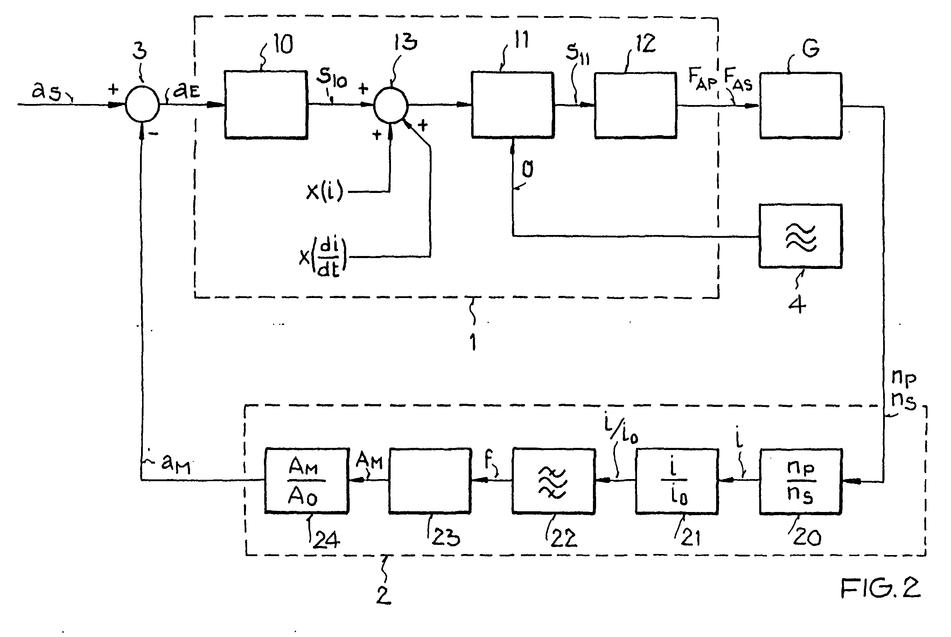

Hierzu wird im Endlagenbetriebsmodus eine Regelung gemäß dem in Figur 2 gezeigten Funktionsblockschaltbild vorgenommen. Das Funktionsblockschaltbild zeigt einen Regelkreis mit dem Getriebe G als Regelstrecke und mit einer Meßeinrichtung 2, einem Stellglied 1 und einem Sollwertvergleicher 3 als Regeleinrichtung. Bei der mit diesem Regelkreis durchgeführten Regelung werden die Antriebsdrehzahl $n_R$ und die Abtriebsdrehzahl $n_S$ des Getriebes G mit geeigneten Sensoren gemessen und in der Meßeinrichtung 2 ausgewertet. Die Meßeinrichtung 2 liefert dabei als Auswerteergebnis einen Meßwert $a_M$, der ein Maß für die auf die verschiebbaren Kegelscheiben P2, S2 wirkenden mittleren Endlagenkräfte $F_{LP}$, $F_{LS}$ ist. Der Meßwert $a_M$ wird anschließend im Sollwertvergleicher 3 mit einem beispielsweise von einem Steuergerät bereitgestellten Sollwert $a_S$ verglichen. Das Ergebnis dieses Vergleichs - die Regelabweichung $a_E$ - wird dem Stellglied 1 zugeführt, das die auf die verschiebbaren Kegelscheiben P2, S2 wirkenden Aktuatorkräfte $F_{AP}$, $F_{AS}$ nach Maßgabe der Regelabweichung $a_E$ steuert.

Das Stellglied 1 umfaßt einen ersten Regler 10, einen zweiten Regler 11 und eine beispielsweise als elektrohydraulischer Wandler ausgeführte Aktuatoreinrichtung 12 mit den Aktuatoren AP und AS. Das erste Stellglied 10 erzeugt aus der Regelabweichung $a_E$ ein erstes Stellsignal $s_{10}$, das dem Sollwert des Aktuatoranteils $F_{VA}$ der gewünschten Verstellkraft $F_V$ entspricht. Dem ersten Stellsignal $s_{10}$ können optional, beispielsweise über ein Summationsglied 13, ein von der Übersetzung i abhängiges Vorsteuersignal x(i) und/oder ein von der zeitlichen Änderung di/dt der Übersetzung i abhängiges Vorsteuersignal x(di/dt) überlagert werden. Die Überlagerung dieser Vorsteuersignale x(i), x(di/dt) erfolgt jedoch nur für bestimmte Zeiten und nur beim Auftreten einer großen, einen bestimmten Wert überschreitenden Regelabweichung $a_E$. Derartige große Regelabweichungen $a_E$ können beispielsweise durch eine schnelle Betätigung des Fahrpedals entstehen. Das erste Stellsignal $s_{10}$ und ggf. die Vorsteuersignale x(i) und/oder x(di/dt) sowie ein von einem Oszillator 4 erzeugtes periodisches Oszillatorsignal o werden dem zweiten Regler 11 als Eingangssignale zugeführt. Der zweite Regler 11 erzeugt daraus mindestens ein weiteres Steuersignal $s_{11}$, durch das oder durch die die Aktuatoren AP, AS der Aktuatoreinrichtung 12 und somit die auf die verschiebbaren Kegelscheiben P2, S2 wirkenden Aktuatorkräfte $F_{AP}$, $F_{AS}$ gesteuert werden. Das Oszillatorsignal o bewirkt dabei eine Modulation der Aktuatorkräfte $F_{AP}$, $F_{AS}$, d. h. den Aktuatorkräften $F_{AP}$, $F_{AS}$ wird durch das Oszillatorsignal o jeweils eine Kraftschwingung aufgeprägt. Der Aktuatoranteil $F_{VA}$ der Verstellkraft $F_V$ setzt sich somit aus einem Gleichanteil und einem durch das Oszillatorsignal o hervorgerufenen Schwingungsanteil mit einer Schwingungsamplitude $A_O$ zusammen. Der Schwingungsanteil bewirkt dabei eine oszillierende Verschiebung der verschiebbaren Kegelscheiben P2, S2 und somit eine entsprechende Modulation der Übersetzung i. Die Modulation der Aktuatorkräfte $F_{AP}$, $F_{AS}$ erfolgt durch die Wahl der Schwingungsamplitude $A_O$ und der Oszillatorfrequenz derart, daß die hieraus resultierende Modulation der Übersetzung i vom Fahrer nicht wahrgenommen wird oder zumindest nicht als störend wahrgenommen wird.

Die Modulation der Übersetzung i, d. h. die Amplitude mit der die Übersetzung i in Antwort auf die Modulation der Aktuatorkräfte $F_{AP}$, $F_{AS}$ um ihren Gleichanteil schwingt, ist davon abhängig, ob die verschiebbaren Kegelscheiben P2, S2 in ihre Endlagen bewegt werden, was eine Dämpfung der Schwingung zur Folge hat. Die Modulation der Übersetzung i, ist somit ein Maß für den mittleren Abstand der verschiebbaren Kegelscheiben P2, S2 zu ihren jeweiligen Endlagen und somit ein Maß für die mittleren auf die verschiebbaren Kegelscheiben P2, S2 wirkenden Endlagenkräfte $F_{LP}$, $F_{LV}$ oder ein Maß des mittleren Endlagenkraftanteils $F_{VL}$ der Verstellkraft $F_V$.

Dieses Maß wird mit der Meßeinrichtung 2 aus der Antriebsdrehzahl $n_P$ und der Abtriebsdrehzahl $n_S$ des Getriebes G als Meßwert $a_M$ ermittelt. Die Meßeinrichtung 2 umfaßt hierzu eine Übersetzungsermittlungseinrichtung 20, mit der die Übersetzung i aus der Antriebsdrehzahl $n_P$ und der Abtriebsdrehzahl $n_S$ ermittelt wird, eine Übersetzungsnormierungseinrichtung 21, mit der die Übersetzung i auf einen Übersetzungsnormierungswert $i_0$ normiert wird, eine Bandpaßeinrichtung 22, mit der die vom Oszillatorsignal o herrührenden Signalanteile aus dem normierten Übersetzungssignal $i/i_0$ ermittelt werden, eine Amplitudenermittlungseinrichtung 23, mit der die Schwingungsamplitude $A_M$ der Übersetzung i aus dem von der Bandpaßeinrichtung 22 abgegebenen Signal f, beispielsweise durch eine Gleichrichtung und nachfolgende Tiefpaßfilterung, ermittelt wird, und eine Amplitudennormierungseinrichtung 24, mit der der Meßwert $a_M$ als Ergebnis einer Normierung der Schwingungsamplitude $A_M$ der Übersetzung i auf die Schwingungsamplitude $A_O$ des Aktuatoranteils $F_{VA}$ der Verstellkraft $F_V$ gebildet wird.

In Fällen, in denen der vom Oszillatorsignal o herrührende Schwingungsanteil der Übersetzung i mehrere Signalbeiträge unterschiedlicher Frequenz aufweist, beispielsweise einen Signalbeitrag bei einer der Oszillatorfrequenz entsprechenden Grundfrequenz und weitere Signalbeiträge bei zur Grundfrequenz harmonischen Frequenzen, kann die Bandpaßeinrichtung 22 für jeden dieser Signalbeiträge einen Durchlaßbereich aufweisen. In der Amplitudenermittlungseinrichtung 23 wird dann die Amplitude jedes von der Bandpaßeinrichtung 22 durchgelassenen Signalbeitrags ermittelt, mit jeweils einem bestimmten Faktor gewichtet und anschließend zu einem Signal summiert, das als Schwingungsamplitude $A_M$ der Übersetzung i an die Amplitudennormierungseinrichtung 24 abgegeben wird.

Auf die Übersetzungsnormierungseinrichtung 21 und die Amplitudenormierungseinrichtung 24 kann selbstverständlich verzichtet werden, ein derartiger Verzicht bedeutet jedoch einen erheblichen Aufwand bei der Anpassung des Regelkreises an verschiedene Getriebetypen.

Durch den Regelkreis wird der Gleichanteil der Aktuatorkräfte derart variiert, daß der Meßwert $a_M$ auf den Sollwert $a_S$ eingeregelt wird. Der Sollwert $a_S$ wird dabei derart gewählt, daß bei eingeregeltem Meßwert $a_M$ die Dämpfung der Schwingung der Übersetzung i mit Sicherheit erkannt wird und daß die dann wirkende mittlere Endlagenkraft $F_{LP}$ bzw. $F_{LS}$ möglichst klein gehalten wird. Der Meßwert $a_M$ wird somit auf einen Wert geregelt, bei dem sich für die mittlere Endlagenkraft $F_{LP}$ bzw. $F_{LS}$ ein vorgegebener und noch als zulässig angesehener Wert ergibt.

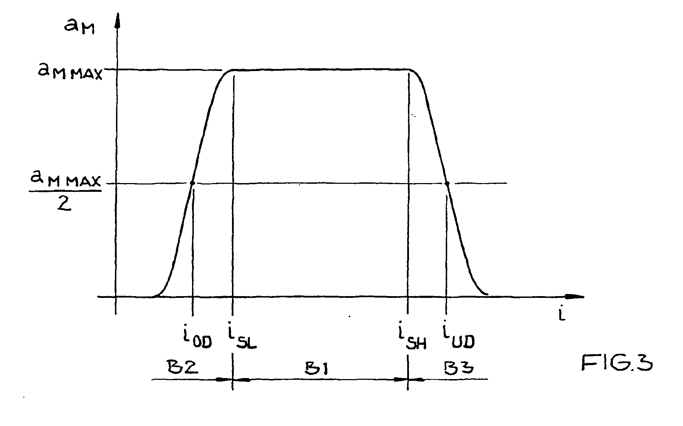

Figur 3 zeigt den Verlauf des Meßwerts $a_M$ in Abhängigkeit des Gleichanteils der Übersetzung i. Der gesamte Übersetzungsbereich ist durch die beiden Übersetzungsschwellwerte $i_{SL}$, $i_{SH}$ in drei Bereiche B1, B2, B3 aufgeteilt. Der zwischen den Übersetzungsschwellwerten $i_{SL}$, $i_{SH}$ liegende Bereich B1 stellt dabei den Normalübersetzungsbereich dar, in dem das Getriebe G im Normalbetriebsmodus betrieben wird. Der unterhalb des Normalübersetzungsbereichs B1 liegende Bereich B2 und der oberhalb des Normalübersetzungsbereichs B1 liegende Bereich B3 stellen jeweils einen unteren bzw. oberen Endlagenübersetzungsbereich dar, in dem die Antriebseinheit im Endlagenbetriebsmodus betrieben wird. Im folgenden wird im Endlagenbetriebsmodus noch zwischen einem Overdrive-Betrieb bei im unteren Endlagenübersetzungsbereich B2 liegenden Übersetzungswerten i und zwischen einem Underdrive-Betrieb bei im oberen Endlagenübersetzungsbereich B3 liegenden Übersetzungswerten i unterschieden.

Im Normalübersetzungsbereich B1 nimmt der Meßwert $a_M$ seinen maximalen Wert $a_{MMAX}$ an, da keine der verschiebbaren Kegelscheiben P2, S2 in Folge der Modulation der Aktuatorkräfte $F_{AP}$, $F_{AS}$ in ihre jeweilige Endlage gelangen und die Schwingung der Übersetzung i somit nicht gedämpft wird. Der Endlagenkraftanteil $F_{VL}$ der Verstellkraft $F_V$ ist dann gleich Null.

Im unteren Endlagenübersetzungsbereich 82, d. h. beim Overdrive-Betrieb, ist der Endlagenkraftanteil $F_{VL}$ der Verstellkraft $F_V$ ungleich Null, da die verschiebbare Kegelscheibe S2 des sekundären Kegelscheibenrads S durch die Modulation der Aktuatorkräfte $F_{AP}$, $F_{AS}$ in ihre Endlage bewegt wird. Dies hat eine Dämpfung des Schwirigungsanteils der Übersetzung i zur Folge hat, welche sich in einer Abnahme des Meßwerts $a_M$ bei abnehmender Übersetzung i äußert.

Entsprechend ist der Endlagenkraftanteil $F_{VL}$ der Verstellkraft $F_V$ auch bei Übersetzungswerten aus dem oberen Endlagenübersetzungsbereich B3, d. h. beim Underdrive-Betrieb, ungleich Null, da in diesem Fall nunmehr die verschiebbare Kegelscheibe P2 des primären Kegelscheibenrads P durch die Modulation der Aktuatorkräfte $F_{AP}$, $F_{AS}$ in ihre Endlage bewegt wird, was wiederum eine Dämpfung des Schwingungsanteils der Übersetzung i zur Folge hat, die sich in einer Abnahme des Meßwerts $a_M$ bei zunehmender Übersetzung i äußert.

Es hat sich als vorteilhaft erwiesen, den Meßwert $a_M$ im Endlagenbetriebsmodus auf den Sollwert $a_S = a_{MMAX}/2$ zu regeln. Bei diesem Sollwert $a_S$ ist die Steilheit der $a_M(i)$-Kurve hoch, so daß geringe Schwankungen der Übersetzung i schnell erkannt und ausgeregelt werden können und zudem ist die mittlere Endlagenkraft $F_{LP}$ bzw. $F_{LS}$ ist so gering, daß sie noch als zulässig angesehen werden kann, da sie sich nur in einem vertretbaren Maße negativ auf den Wirkungsgrad und die Lebensdauer des Getriebes G auswirkt.

Die Übersetzungswerte $i_{OD}$ und $i_{UD}$ die man im Endlagenbetriebsmodus bei auf den vorgegebenen Sollwert $a_S$ eingeregeltem Meßwert $a_M$ erhält, stellen die maximal bzw. minimal zulässigen Übersetzungswerte, d. h. die Aussteuergrenzen des Getriebes G dar. Diese Aussteuergrenzen $i_{OD}$, $i_{UD}$ lassen sich mit dem beschriebenen Verfahren ermitteln und adaptiv an sich ändernde Betriebsbedingungen anpassen. Hierzu wird bei eingeregeltem Meßwert $a_M$ geprüft, ob bestimmte Betriebsbedingungen vorliegen, beispielsweise wird geprüft, ob das dem Getriebe G zugeführte Motormomentmoment innerhalb eines bestimmten, in Abhängigkeit der Übersetzung i gewählten Bereichs liegt. So wird vorteilhafterweise geprüft, ob das Motormoment beim Underdrive-Betrieb innerhalb eines Bereichs von -10 Nm bis 10 Nm liegt und beim Overdrive-Betrieb größer als 50 Nm ist. Trifft dies zu, wird der Gleichanteil der aktuell ermittelten Übersetzung i im Falle eines Underdrive-Betriebs als obere Aussteuergrenze $i_{UD}$ bzw. im Falle eines Overdrive-Betriebs als untere Aussteuergrenze $i_{OD}$ abgespeichert. Vorteilhafterweise werden diese Verfahrensschritte mehrmals wiederholt und die zu unterschiedlichen Zeitpunkten jeweils geltenden Aussteuer grenzen zwischengespeichert. Die für den aktuellen Zeitpunkt geltende obere bzw. untere Aussteuergrenze $i_{UD}$ bzw. $i_{OD}$ erhält man dann durch Mittelung der entsprechenden zwischengespeicherten Aussteuergrenzen. Durch diese Mittelung wird die Meßgenauigkeit erhöht, da Rauschbeiträge unterdrückt werden.

Die Aussteuergrenzen $i_{UD}$, $i_{OD}$ können zur Definition des Normalübersetzungsbereichs B1 verwendet werden. So kann der Normalübersetzungsbereich B1 als ein zwischen den Aussteuergrenzen $i_{UD}$, $i_{OD}$ liegender Bereich definiert werden, dessen Grenzen $i_{SH}$, $i_{SL}$ jeweils um einen bestimmten Wert von der oberen bzw. unteren Aussteuergrenze $i_{UD}$ bzw. $i_{OD}$ beabstandet sind.

Die Aussteuergrenzen $i_{UD}$, ioo werden vorteilhafterweise im Regelkreis aus Figur 2 als Übersetzungsnormierungswert $i_0$, auf den die Übersetzung i in der Übersetzungsnormierungseinrichtung 21 normiert wird, verwendet. Dabei wird der Übersetzungsnormierungswert $i_0$ bei der Inbetriebnahme des Regelkreises zunächst auf einen geeignet gewählten Initialisierungswert initialisiert. Nachdem die aktuellen Aussteuergrenzen $i_{OD}$, $i_{UD}$ ermittelt wurden, wird bei einem Overdrive-Betrieb die untere Aussteuergrenze $i_{OD}$ und bei einem Underdrive-Betrieb die obere Aussteuergrenze $i_{UD}$ als Übersetzungsnormierungswert $i_0$ verwendet.

## Patentansprüche

1. Verfahren zur Steuerung eines stufenlosen Getriebes (G), dessen Übersetzung (i) durch mindestens eine auf verschiebbare Verstellmittel (P2, S2) wirkende Aktuatorkraft ($F_{AP}$, $F_{AS}$) zwischen zwei Übersetzungsendwerten stufenlos variierbar ist, **dadurch gekennzeichnet, daß** ein Endlagenbetriebsmodus als Betriebsmodus definiert wird, in dem

   - durch Modulation der Aktuatorkraft oder der Aktuatorkräfte ($F_{AP}$, $F_{AS}$), indem dieser Aktuatorkraft oder diesen Aktuatorkräften eine Kraftschwingung aufgeprägt wird, die Übersetzung (i) des Getriebes (G) derart moduliert wird, dass ihre Amplitude in Antwort auf die Modulation der Aktuatorkraft oder der Aktuatorkräfte ($F_{AP}$, $F_{AS}$) um ihren Gleichanteil schwingt,
   - ein von der Modulation der Übersetzung (i) des Getriebes (G) abhängiger Meßwert ($a_M$) ermittelt wird und
   - der ermittelte Meßwert ($a_M$) durch Variation des Gleichanteils der Aktuatorkraft oder der Aktuatorkräfte ($F_{AP}$, $F_{AS}$) auf einen vorgegebenen Sollwert ($a_S$) geregelt wird.

2. Verfahren nach Anspruch 1, **dadurch gekennzeichnet, daß** der Sollwert ($a_S$) für den Meßwert derart vorgegeben wird, daß bei eingeregeltem Meßwert ($a_M$) mindestens eines der Verstellmittel (P2, S2) mit einer vorgegebenen mittleren Kraft auf eine mechanische Wegbegrenzung (LP, LS) wirkt.

3. Verfahren nach einem der vorherigen Ansprüche, **dadurch gekennzeichnet, daß** ein Normalbetriebsmodus als weiterer Betriebsmodus definiert wird, in dem die Übersetzung (i) des Getriebes (G) oder eine Antriebsdrehzahl ($n_p$) des Getriebes (G) gemäß einer vorgegebenen Regelstrategie geregelt wird, und daß das Getriebe (G) bei im Bereich der Übersetzungsendwerte liegenden Werten der Übersetzung (i) im Endlagenbetriebsmodus und ansonsten im Normalbetriebsmodus betrieben wird.

4. Verwendung des Verfahrens nach einem der vorherigen Ansprüche zur Steuerung einer Antriebseinheit eines Kraftfahrzeugs mit stufenlosem Getriebe.

**Claims**

1. A method for controlling a stepless transmission (G) of which the transmission ratio (i) is infinitely variable between two transmission end values by at least one actuator force ($F_{AP}$, $F_{AS}$) effective on shiftable adjustment means (P2, S2), **characterized in that** an end position operating mode is defined as operation mode by

   - modulating the transmission ratio (i) of the transmission (G) by modulating the actuator force or forces ($F_{AP}$, $F_{AS}$), onto which a force oscillation is impressed, such that the amplitude of the transmission ratio (i) of the transmission (G) in response to the modulation of the actuator force or forces ($F_{AP}$, $F_{AS}$) oscillates by its equal proportion,
   - by detecting a measured value ($a_M$), which is dependent on the modulation of the transmission ratio (i) of the transmission (G), and
   - by controlling in closed loop manner the measured value ($a_M$) to a predetermined desired value (as) by varying the equal proportion of the actuator force or of the actuator forces ($F_{AP}$, $F_{AS}$).

2. A method of claim 1, **characterized in that** the desired value (as) is predetermined for the measured value in such a way that for an adjusted measured value ($a_M$) at least one of the shiftable adjustment means (P2, S2) acts on a mechanical displacement stop (LP, LS) with a predetermined mean force.

3. A method according to one of the preceding claims, **characterized in that** a normal operation mode is defined as a further operation mode, **in that** the transmission ratio (i) of the transmission (G) or a drive r.p.m. ($n_P$) of the transmission (G) is controlled in a closed loop manner in accordance with a predetermined control strategy, and **in that** the transmission (G) in case the values of the transmission ratio (i) are lying in the range of the transmission end values, is operated in the end position mode and otherwise in the normal operation mode.

4. Use of the method according to one of the preceding claims for controlling a drive unit of a motor vehicle with a stepless transmission.

**Revendications**

1. Procédé pour la commande d'une boîte de vitesses à variation continue (G), dont la transformation (i) peut être continûment variée par une force d'actionneur ($F_{AP}$, $F_{AS}$) au moins agissant sur des éléments de réglage (P2, S2) mobiles entre deux valeurs finales de transformation, **caractérisé en ce qu'**un mode de service en position finale est défini comme mode de service, où

   - la transformation (i) de la boîte de vitesses (G) est modulée par modulation de la force d'actionneur ou des forces d'actionneur ($F_{AP}$, $F_{AS}$), une oscillation mécanique étant imprimée à cette force d'actionneur ou à ces forces d'actionneur, de telle manière que son amplitude en réponse à la modulation de la force d'actionneur ou des forces d'actionneur ($F_{AP}$, $F_{AS}$) oscille autour de sa composante continue,
   - une valeur de mesure ($a_M$) dépendante de la modulation de la transformation (i) de la boîte de vitesses (G) est déterminée, et
   - la valeur de mesure déterminée ($a_M$) est réglée à une valeur de consigne prescrite ($a_S$) par variation de la composante continue de la force d'actionneur ou des forces d'actionneur ($F_{AP}$, $F_{AS}$).

2. Procédé selon la revendication 1, **caractérisé en ce que** la valeur de consigne ($a_S$) est prescrite pour la valeur de mesure ($a_M$) de manière à ce qu'un des éléments de réglage (P2, S2) au moins agisse avec une force moyenne prescrite sur une limitation mécanique de course (LP, LS).

3. Procédé selon l'une des revendications précédentes, **caractérisé en ce qu'**un mode de service normal est défini comme autre mode de service, où la transformation (i) de la boîte de vitesses (G) ou une vitesse de rotation d'entraînement ($n_p$) de la boîte de vitesses (G) est réglé conformément à une stratégie de régulation prescrite, et **en ce que** la boîte de vitesses (G) est manoeuvrée aux valeurs de transformation (i) comprises dans la plage des valeurs finales de transformation en mode de service en position finale, et sinon en mode de service normal.

4. Utilisation du procédé selon l'une des revendications précédentes, pour la commande d'une unité de transmission d'un véhicule automobile à boîte de vitesses à variation continue.

EP 1 368 585 B1

FIG.1

9

FIG. 2

FIG.3